# EUROPEAN PATENT APPLICATION

(11) **EP 4 691 921 A1**
(43) Date of publication of application: **11.02.2026**
(21) Application number: 23720164.5
(22) Date of filing: 29.03.2023
(51) Int. Cl.: B64G 1/64, B64G 1/22

(54) **SYSTEM FOR HOLD DOWN AND RELEASE OF A SPACECRAFT WITH RESPECT TO A LAUNCHER**

(71) Applicant: Airbus Defence and Space, S.A., 28022 Madrid (ES)
(72) Inventor: BORDA ZABALA, Iñigo Javier, 28022 Madrid (ES); CASADO MONTIANO, Rubén, 28022 Madrid (ES)
(74) Representative: Elzaburu S.L.P.
(86) International application number: PCT/ES2023/070207
(87) International publication number: WO 2024/200883

(57) **Abstract**

System (1) for hold down and release of a spacecraft with respect to a launcher, configured to be able to change from a closed state to an open state, that comprises:
- an upper bracket (2) in the form of a ring comprising an inner protruding portion (4),
- a lower bracket (3) in the form of a ring comprising an inner protruding portion (4'),
- an internal assembly (5) fixed to the lower bracket (3) that comprises a central beam (6), at least three levers (7), at least three clamps (8), at least three guiding systems for the clamps (8), a central rod (11) and an actuator (12),
wherein:
- the upper bracket (2) and the lower bracket (3) enclose an interior hollow space where the internal assembly (5) is placed in a closed state of the system (1),
- the clamps (8) of the internal assembly (5) have a peripheral groove (13) configured to mate with the protruding portions (4, 4') of the upper bracket (2) and the lower bracket (3),
- each lever (7) is rigid, is articulated to a clamp (8) by a hinge (14) and to the central beam (6) by a hinge (14') and comprises a latch system (15) to fix the lever (7) on the central beam (6) in an open state of the system (1),
- the clamps (8) are guided by the guiding systems that allow the radial movement of the clamps (8), each guiding system comprising a guide (9) on which at least one pin (10) protruding from the corresponding clamp (8) is fitted, and
- the central rod (11) is joined to the central beam (6), is preloaded in a closed state of the system (1) by torquing an upper nut (19) and is releasable by the action of the actuator (12).

## Description

### Field of the invention

The invention refers to a system for hold down and release of a spacecraft with respect to a launcher.

The system is an assembly that basically comprises an internal hold down and release device, a bracket configured to be attached to a spacecraft and a bracket configured to be attached to a launcher.

### Background of the invention

Most used separation systems for spacecraft are either clamp bands, with a continuous cylindrical interface between a spacecraft and a launcher, and HRS (Hold & Release Systems) which are discrete points (usually four points) on one face of the spacecraft.

The HRS type systems are based on two brackets (one attached to the spacecraft and the other attached to the launcher) held by a pyronut. When the satellite needs to be separated from the launcher, four pyronuts are activated and the spacecraft is separated from the launcher.

In HRS type separation systems the loads are directly transmitted to the pyronut. The loads the separation system can handle are limited down to the sum of pyronuts capability (around 30kN) and consequently there is a limitation on the spacecraft mass (<600 kg).

For larger satellites which are attached with discrete point interfaces, several actuators per point are used in order to handle the flight loads, with the corresponding increase on price, trigger lines, etc.

Besides, the shock generated when the HRS is released is not reduced by any mechanism.

EP 2213572 A1 discloses a device for holding down a mobile structure to a spacecraft and for releasing said mobile structure and comprises a stationary structure fixed to the spacecraft, an actuator, a releasable member driven to movement in an axial direction relative to the stationary structure upon activation of the actuator and a locking assembly arranged to hold down or release the mobile structure depending on the axial position of the releasable member. The locking assembly comprises a plurality of circumferentially arranged locking members being movable in a radial direction into and out of engagement with the mobile structure, the locking members being connected to the releasable member via first levers, such that the axial movement of the releasable member and the radial movement of the locking member are coupled with each other by way of a bent lever type mechanism.

Accordingly, there is a need to provide a system for hold down and release of a spacecraft with respect to a launcher with a wide range of load capability that reduces the number of actuators per point and the shock generated when the HRS is released.

### Summary of the invention

The object of the invention is to provide a system for hold down and release of a spacecraft with respect to a launcher that overcomes the mentioned drawbacks.

The invention provides a system for hold down and release of a spacecraft with respect to a launcher, configured to be able to change from a closed state to an open state, that comprises:
- an upper bracket in the form of a ring comprising an inner protruding portion,
- a lower bracket in the form of a ring comprising an inner protruding portion,
- an internal assembly fixed to the lower bracket that comprises a central beam, at least three levers, at least three clamps, at least three guiding systems for the clamps, a central rod and an actuator,
wherein:
- the upper bracket and the lower bracket enclose an interior hollow space where the internal assembly is placed in a closed state of the system,
- the clamps of the internal assembly have a peripheral groove configured to mate with the protruding portions of the upper bracket and the lower bracket,
- each lever is rigid, is articulated to a clamp by a hinge and to the central beam by a hinge and comprises a latch system to fix the lever on the central beam in an open state of the system,
- the clamps are guided by the guiding systems that allow the radial movement of the clamps, each guiding system comprising a guide on which at least one pin protruding from the corresponding clamp is fitted, and
- the central rod is joined to the central beam, is preloaded in a closed state of the system by torquing an upper nut and is releasable by the action of the actuator.

Other advantages of the invention are the following ones:
- The system provides the load capability demanded to a single point for spacecraft such as large satellites with discrete interface points.
- The system provides separation with a single standard actuator per point.
- The internal mechanism of the system allows the reduction of the shock generated when separation takes place.
- The system is configured as an assembly that can be easily and directly coupled as a single unit to a spacecraft and to a launcher.
- The use of robust elements, such as the levers and the guide systems, allows the system to be used when a high load capacity is required.

Other characteristics and advantages of the present invention will be clear from the following detailed description of several embodiments illustrative of its object in relation to the attached figures.

### Brief description of drawings

Figure 1 shows a view in cross section of an embodiment of the system for hold down and release of a spacecraft with respect to a launcher of the invention in a closed mode.
Figure 2 shows a view in cross section of the embodiment of the system for hold down and release of a spacecraft with respect to a launcher of Figure 1 in an open mode.
Figure 3 shows a view in cross section of the embodiment of the system for hold down and release of a spacecraft with respect to a launcher of Figure 1 in an open mode, with the spacecraft separated from the launcher.
Figure 4 shows another view in frontal cross section of the embodiment of the system for hold down and release of a spacecraft with respect to a launcher of the invention of Figure 1 in a closed mode.
Figure 5 shows a plan view of Figure 4.
Figure 6 shows another view in frontal cross section of an embodiment of the system for hold down and release of a spacecraft with respect to a launcher of the invention of Figure 1 in an open mode.
Figure 7 shows a plan view of Figure 6.
Figure 8 shows a view in cross section of another embodiment of the system for hold down and release of a spacecraft with respect to a launcher of the invention in a closed mode.
Figure 9 shows a view in cross section of the embodiment of the system for hold down and release of a spacecraft with respect to a launcher of Figure 8 in an open mode.
Figure 10 shows a view in cross section of the embodiment of the system for hold down and release of a spacecraft with respect to a launcher of Figure 8 in an open mode, with the spacecraft separated from the launcher.
Figure 11 shows another view in frontal cross section of the embodiment of the system for hold down and release of a spacecraft with respect to a launcher of Figure 8 in a closed mode.
Figure 12 shows a plan view of Figure 11.
Figure 13 shows another view in frontal cross section of the embodiment of the system for hold down and release of a spacecraft with respect to a launcher of Figure 8 in an open mode.
Figure 14 shows a plan view of Figure 13.
Figure 15 shows an enlarged detail of Figure 11.
Figure 16 shows an enlarged detail of Figure 13.

### Detailed description of the invention

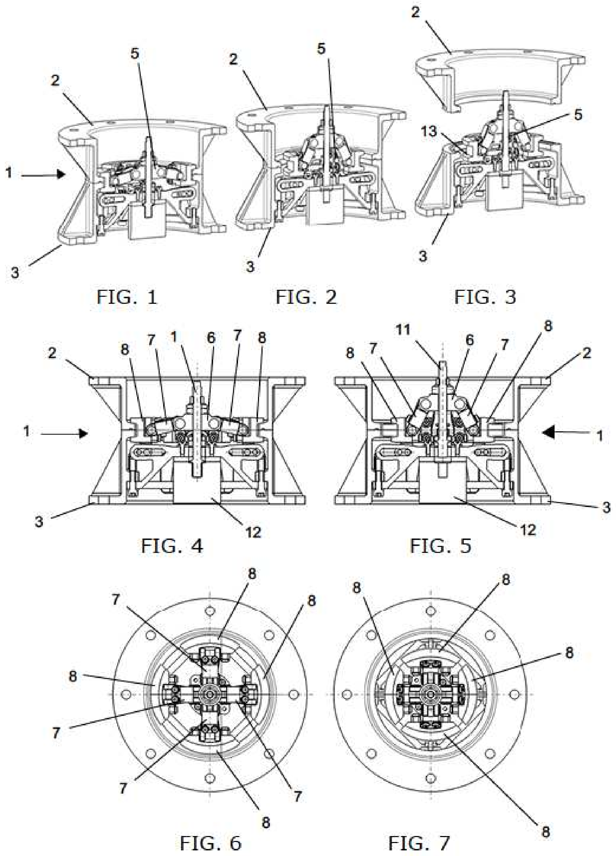

Figures 1 to 7 correspond to a first embodiment of the system 1 for hold down and release of a spacecraft with respect to a launcher of the invention, that comprises four levers 7 and four clamps 8, arranged symmetrically in pairs.

As it can be seen in the Figures 1 to 7, the system 1 for hold down and release of a spacecraft with respect to a launcher basically comprises an upper bracket 2 in the form of a ring comprising an inner protruding portion 4, a lower bracket 3 in the form of a ring comprising an inner protruding portion 4' and an internal assembly 5 fixed to the lower bracket 3.The upper bracket 2 is configured to be attached to a spacecraft and the lower bracket 3 is configured to be attached to a launcher, such that in a closed state of the system 1 the internal assembly 5 joins said brackets 2, 3.

For the purposes of this document, it is understood that the upper and lower relative positions are as shown in the figures, i.e., the lower relative position corresponds to the lower bracket 3 that is configured to be attached to a launcher and that the upper relative position corresponds to the upper bracket 2 that is configured to be attached to a spacecraft.

The internal assembly 5 of the embodiment of Figures 1 to 7 comprises a central beam 6, four levers 7, four clamps 8, four guiding systems for the clamps 8, a central rod 11 and an actuator 12. The clamps 8 are arranged circumferentially on the periphery of the internal assembly 5.

In a closed state of the system 1, the upper bracket 2 and the lower bracket 3 enclose an interior hollow space where the internal assembly 5 is placed. These figures 1 to 7 also show that the clamps 8 of the internal assembly 5 have a peripheral groove 13 configured to mate with the protruding portions 4 4' of the upper bracket 2 and the lower bracket 3. It can also be seen that each lever 7 is articulated to a clamp 8 and to the central beam 6 by corresponding hinges 14, 14'.

Each clamp 8 has a corresponding guiding system configured to guide it allowing the radial movement of the clamp 8. Each guiding system comprises a guide 9 on which at least one pin 10 protruding from the corresponding clamp 8 is fitted and on which the pin 10 can move radially.

As for the central rod 11, it is joined to the central beam 6 and is releasable by the action of the actuator 12 and is preloaded in a closed state of the system 1. The central rod 11 and the central beam 6 can move axially.

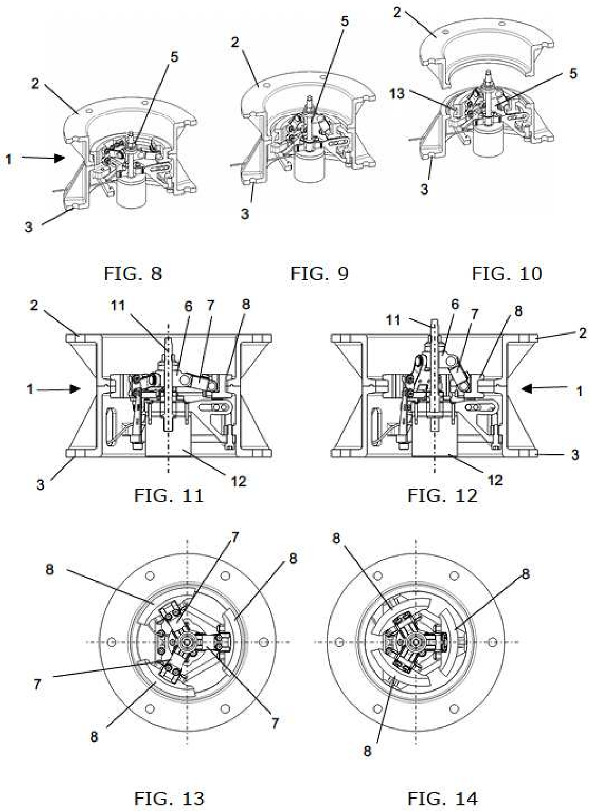

Figures 8 to 14 correspond to a second embodiment of the system 1 for hold down and release of a spacecraft with respect to a launcher of the invention, that comprises three levers 7 and three clamps 8, with an equal angular separation between them.

The configuration of this second embodiment is similar to that of the first embodiment previously described, the difference being that it comprises three clamps 8 instead of four. Accordingly, this embodiment comprises three levers 7 and three guiding systems, one for each clamp 8. The minimum number of clamps 8 for satisfactory operation of the system 1 is three.

The three-clamp embodiment has the advantage of offering satisfactory performance with a minimum number of components.

The levers 7 are rigid in both embodiments.

In both embodiments a standard pyronut can be used as an actuator 12. Also, it is possible to use a non-explosive actuator instead of a pyronut, which allows the reduction of the shock.

The system 1 may also comprise a central spring (not shown) acting on the central beam 6 to assist its axial movement.

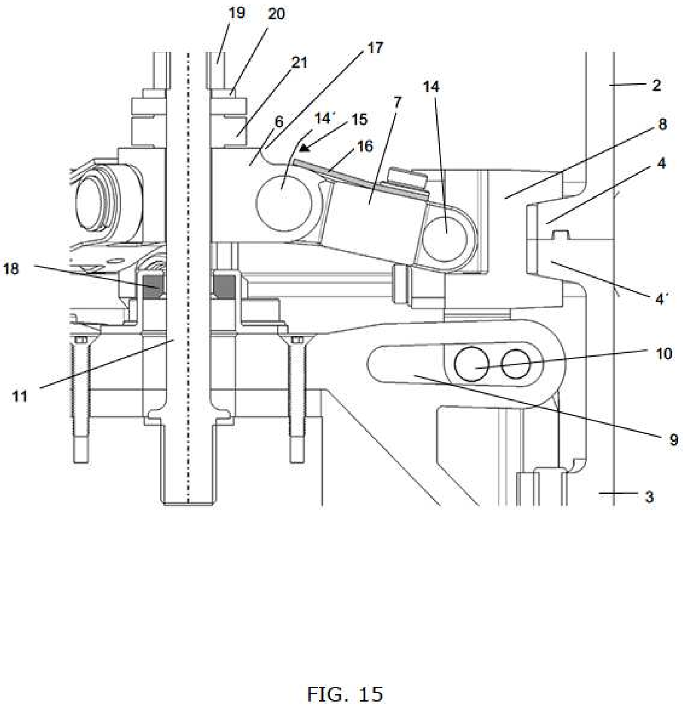

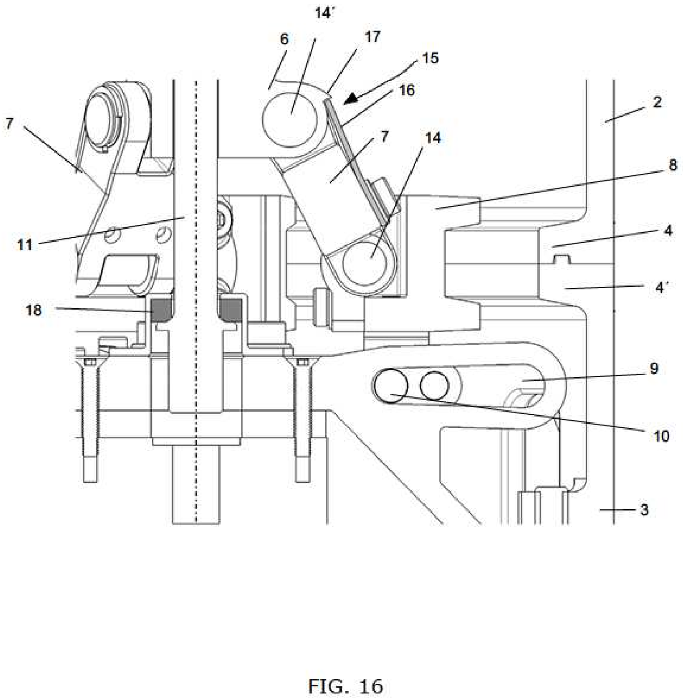

Figures 15 (closed position) and Figure 16 (open position) are enlarged details of the internal assembly 5, in which a stopper 18 that limits the movement of the central rod 11 can be seen. The stopper 18 can be covered with elastomer, in order to be able to reduce the shock of the rebound of the central rod 11 after opening.

Figures 15 and 16 also allow to see that each lever 7 comprises a latch system 15 to fix the lever 7 in a retracted position, in the open state of the system 1.

The latch system 15 may comprise a metallic blade 16 arranged on the lever 7 and a recess 17 made on the central beam 6, such that in an open position of the system 1 (Figure 16) the metallic blade 16 can be coupled with the recess 17 made on the central beam 6 and can be retained by this recess17, thus preventing the additional rotation of the lever 7.

In the closed state of the system 1, the central rod 11 is preloaded vertically by torquing an upper nut 19, and this vertical preload of the central rod 11 is converted in radial forces through the levers 7 up to the clamps 8, such that the inner clamps 8 are tensioned and coupled to the protruding portions 4, 4' of the upper bracket 2 and the lower bracket 3 (Figures 1 and 8).

A controlled tensioning system comprises an upper nut 19, a washer 20 and a calibrated bushing 21, which measures the preload in kN. By torquing the upper nut 19 in Nm, a preload in kN is achieved on the central rod 11 to ensure the load capability of the system 1.

The upper nut 19 is in an upper relative position with respect to the washer 20 and the calibrated bushing 21, as shown in the figures, following the same criteria for upper and lower positions as adopted for the brackets 2, 3 in this document.

When the actuator 12 is activated, the central rod 11 is released and the central beam 6 moves axially upwards. The levers 7 start rotating as the levers 7 are articulated with hinges 14, 14' with respect to the central beam 6 and to the clamps 8. The clamps 8 are pulled by the levers 7 and retracted radially with the help pf the guiding systems, as the pins 10 move radially in the guides 9. In this point the brackets 2, 3 are free to separate (Figures 2-3; 9-10), and the spacecraft is released from the launcher.

Some advantages of this system 1 are the following ones:
- High demultiplication factor due to the clamp interface and the internal assembly mechanism. Low actuator preload is needed ( _{~}20kN, standard pyronuts) to support high external loads ( _{~}200 kN).
- External loads and the preload between brackets 2, 3 are decoupled from the actuator 12 and the shock is reduced.

Although the present invention has been fully described in connection with preferred embodiments, it is evident that modifications may be introduced within the scope thereof, not considering this as limited by these embodiments, but by the contents of the following claims.

## Claims

1. System (1) for hold down and release of a spacecraft with respect to a launcher, configured to be able to change from a closed state to an open state, that comprises:
- an upper bracket (2) in the form of a ring comprising an inner protruding portion (4),
- a lower bracket (3) in the form of a ring comprising an inner protruding portion (4'),
- an internal assembly (5) fixed to the lower bracket (3) that comprises a central beam (6), at least three levers (7), at least three clamps (8), at least three guiding systems for the clamps (8), a central rod (11) and an actuator (12),
wherein:
- the upper bracket (2) and the lower bracket (3) enclose an interior hollow space where the internal assembly (5) is placed in a closed state of the system (1),
- the clamps (8) of the internal assembly (5) have a peripheral groove (13) configured to mate with the protruding portions (4, 4') of the upper bracket (2) and the lower bracket (3),
- each lever (7) is rigid, is articulated to a clamp (8) by a hinge (14) and to the central beam (6) by a hinge (14') and comprises a latch system (15) to fix the lever (7) on the central beam (6) in an open state of the system (1),
- the clamps (8) are guided by the guiding systems that allow the radial movement of the clamps (8), each guiding system comprising a guide (9) on which at least one pin (10) protruding from the corresponding clamp (8) is fitted, and
- the central rod (11) is joined to the central beam (6), is preloaded in a closed state of the system (1) by torquing an upper nut (19) and is releasable by the action of the actuator (12).

2. System (1) for hold down and release of a spacecraft with respect to a launcher, according to claim 1, that comprises four levers (7) and four clamps (8), arranged symmetrically in pairs with respect to the central rod (11).

3. System (1) for hold down and release of a spacecraft with respect to a launcher, according to claim 1, that comprises three levers (7) and three clamps (8) with an equal angular separation between them.

4. System (1) for hold down and release of a spacecraft with respect to a launcher, according to any of the previous claims, wherein the movement of the central rod (11) is limited by a stopper (18).

5. System (1) for hold down and release of a spacecraft with respect to a launcher, according to claim 4, wherein the stopper (18) is covered with elastomer.

6. System (1) for hold down and release of a spacecraft with respect to a launcher, according to any of the previous claims, wherein the latch system (15) comprises a metallic blade (16) arranged on the lever (7) and a recess (17) made on the central beam (6), the metallic blade (16) being configured to couple with the recess (17) in an open state of the system (1).

7. System (1) for hold down and release of a spacecraft with respect to a launcher, according to any of the previous claims, wherein the actuator (12) is a pyronut.

8. System (1) for hold down and release of a spacecraft with respect to a launcher, according to any of claims 1 to 6, wherein the actuator (12) is a non-explosive actuator.

9. System (1) for hold down and release of a spacecraft with respect to a launcher, according to any of the previous claims, that additionally comprises a central spring coupled to the central beam (6) to assist its axial movement.
